# EUROPÄISCHE PATENTSCHRIFT

(11) **EP 1 122 995 B1**
(45) Veröffentlichungstag und Bekanntmachung des Hinweises auf die Patenterteilung: **25.02.2004**
(21) Anmeldenummer: 99957928.7
(22) Anmeldetag: 20.10.1999
(51) Int. Cl.: A01D 23/02

(54) **AUTOMATISCHE HÖHENSTEUERUNG FÜR SCHLEGLER MIT NACHKÖPFER VON WURZELFRUCHTERNTEMASCHINEN**
AUTOMATIC HEIGHT ADJUSTMENT SYSTEM FOR FLAILS WITH TOPPERS FOR ROOT CROP HARVESTERS
SYSTEME DE REGULATION AUTOMATIQUE DE LA HAUTEUR DE FLEAUX A DECOLLETEUSE POSTERIEURE POUR DES MACHINES DE RECOLTE DE PLANTE RACINE

(30) Priorität: 21.10.1998 DE 19848484
(43) Veröffentlichungstag der Anmeldung: 16.08.2001
(73) Patentinhaber: Holmer, Alfons, 84069 Eggmühl (DE)
(72) Erfinder: Holmer, Alfons, 84069 Eggmühl (DE)
(74) Vertreter: Wasmeier, Alfons, Dipl.-Ing.
(86) Internationale Anmeldenummer: PCT/DE1999/003367
(87) Internationale Veröffentlichungsnummer: WO 2000/022915

(56) Entgegenhaltungen:
- EP-A- 0 189 015
- DE-A- 3 101 770
- DE-A- 3 502 587
- DE-A- 3 519 889

## Beschreibung

Die Erfindung betrifft eine automatische Höhensteuerung nach dem Oberbegriff des Anspruches 1, und insbesondere auf eine automatische Höhensteuerung für Rübenerntemaschinen.

Bei Maschinen für das Ernten von Wurzelfrüchten wird der Schlegler, mit dem die Arbeitshöhe, bis zu der die Blätter der Wurzelfrüchte entfernt werden, geregelt wird, dadurch eingestellt, daß ein vorlaufendes Tastrad und damit das mit dem Tastrad verbundene Schleglergehäuse in der Höhe verstellt wird, damit eine etwa mittlere Höhenposition der Schleglerwelle erreicht wird. Da das Verstellen des Stütz- oder Tastrades relativ umständlich ist, muß eine mechanische Einstellung der Schleglerhöhe zumindest für einen Teilabschnitt des Bestandes als ausreichend angesehen werden. Die Höhenverstellung des Stützrades erfolgt nach Erfahrungswerten bzw. Schätzwerten der Bedienungsperson. Insbesondere kann hierbei auf kurzfristige Änderungen im Rübenbestand nicht eingegangen werden.

An den Schlegler schließt ein Nachköpfer an, der mit seinen Tastelementen und seinen Schneidmessern eine Kopfscheibe von der Wurzelfrucht abtrennt. Um den Verlust an Wurzelfruchtmasse so gering wie möglich zu halten, muß der Nachköpfer in seiner Arbeitshöhe auf die Höhe der Wurzelfruchtköpfe eingestellt werden, und der Kamm des Nachköpfers muß die Kopfseite der Wurzelfrüchte abtasten. Die Höhenverstellung des Schleglergehäuses bzw. des Schleglerwerkzeuges, und die Höhenverstellung des Nachköpfers erfolgt dabei durch getrennte Einstellvorgänge und Verstellvorrichtungen.

Aus der DE 31 01 770 A1 ist eine Vorrichtung zum Entblättern und Fräsen von Rüben vor dem Roden bekannt, die aus einem ersten, mit Schlegeln bestückten Rotor zum Abarbeiten der Blätter und einem zweiten, mit Fräsmessern bestückten Rotor zum Bearbeiten des Wurzelhalses der Wurzelfrüchte besteht. Der erste Rotor besteht aus einer einzigen, in Fahrtrichtung ansteigenden Welle, die im Bereich ihres oberen Endes um eine horizontale Achse verschwenkbar und in Bezug auf den gewünschten Minimalabstand des unteren Endes vom Boden über eine ihre Verschwenkung nur nach unten begrenzende Feststell-Einrichtung einstellbar ist. Der zweite, ebenfalls um eine horizontale Achse verschwenkbare Rotor ist in Bezug auf seinen jeweiligen Höhenabstand von den zu bearbeitenden Wurzelhälsen durch einen diese Wurzelhälse abtastenden Taster zwangsgesteuert. Bei einer derartigen Vorrichtung ist der zweite Rotor als Trommel ausgebildet, deren Trommelachse in Fahrtrichtung liegt, wobei die Fräsmesser aus dem Trommelmantel angeordnet sind.
Aufgabe der Erfindung ist, eine Höhensteuerung der Schleglerwelle bzw. des Schleglergehäuses selbsttätig vorzunehmen, so daß die Höhenposition der Schleglerwelle sich fortlaufend und ohne mechanische oder manuelle Einstellung dem Rübenbestand automatisch anpaßt, und damit ein entsprechendes höhenverstellbares Stützrad für das Schleglergehäuse entfallen kann.

Gemäß der Erfindung wird dies mit den Merkmalen des Kennzeichens des Anspruches 1 erreicht. Weitere Ausgestaltungen der Erfindung sind Gegenstand der Unteransprüche.

Mit der Erfindung wird erreicht, daß ein Stützrad zur Höhenverstellung des Schleglergehäuses und damit zur Einstellung der Arbeitshöhe des Schleglerwerkzeuges vollständig entfallen kann und eine vollautomatische Höhenverstellung des Schleglers in Verbindung und analog mit der Höheneinstellung des Nachköpfers erreicht wird, in- dem die Höheneinstellung der Tastvorrichtung des Nachköpfers zur analogen Höheneinstellung des Schleglergehäuses benutzt wird. Die Tastvorrichtung am Nachköpfer ist eine bei derartigen Maschinen, insbesondere Rübenerntemaschinen, ohnehin vorhandene und notwendige Einrichtung, mit der die Schnitthöhe bzw. Köpfdicke der Wurzelfrüchte eingestellt wird. Hierbei tastet die Tastvorrichtung die Kopffläche der bereits geschlegelten Frucht ab und paßt seine Höhenposition an den Bestand an, so daß die Köpfposition in der Höhe abhängig von dem Überstand des Wurzelfruchtbestandes über den Erdboden laufend verändert wird. Die Höhenverstellung der Tasteinrichtung am Nachköpfer bestimmt somit die Höhe der Köpfscheibe, die von der Wurzelfrucht abgetrennt wird. Um eine entsprechende Höhenverstellung am Schlegler einzustellen, wird die Höhenänderung am Nachköpfer proportional auf das Schleglergehäuse übertragen, wobei zu berücksichtigen ist, daß das Schleglerwerkzeug die Blätter der Wurzelfrüchte zu entfernen hat und die Arbeitsebene wenige Zentimeter über der Kopffläche der Wurzelfrucht eingestellt werden muß, während die Arbeitsebene am Nachköpfer um wenige Zentimeter (entsprechend der Köpfscheibe) tiefer liegt. Die getastete Oberfläche an der Rübe wird somit in doppelter Weise, nämlich einmal für die Einstellung des Köpfmessers und zum anderen für die Einstellung des Schleglerhöhe verwendet.

Die Wegstrecke, um die sich das Tastelement des Nachköpfers bei sich ändernder Höhe des Bestandes bewegt, wird durch eine elektronische Schaltvorrichtung, z.B. eine Potentiometersteuerung, aufgenommen, die die Wegstrecke in ein elektrisches Signal umwandelt und über dieses elektrische Signal eine Antriebsvorrichtung, z.B. einen Arbeitszylinder, beaufschlagt, der das Schleglergehäuse proportional der Wegstrecke, die das Tastelement in der Höhe zurückgelegt hat, hebt oder senkt, so daß damit die Zustellung des Schleglerwerkzeuges zu den Wurzelfrüchten analog eingestellt wird. Auf diese Weise wird die Höhenbewegung des Schleglergehäuses mit dem Schleglerwerkzeug sowohl in Bezug auf die Richtung als auf die Strecke (bei gegebener Übersetzung) aufeinander abgestimmt und proportional vorgenommen.

Die Umwandlung der Höhenverstellung des Tastelementes am Nachköpfer in elektrische Signale zum entsprechenden Höhenbewegen des Schleglergehäuses kann anstatt über eine Potentiometersteuerung auch über andere herkömmliche Steuervorrichtungen z. B. mechanischer, elektrischer ,elektronischer und sensorischer Art durchgeführt werden. Zweckmäßigerweise hat die mechanische Verbindung zwischen dem Nachköpfer und dem Schleglergehäuse die Form eines Parallelogramms, dessen eine Seite mit dem Tastelement des Köpfers und dessen andere Seite mit dem Schleglergehäuse fest verbunden ist, wobei die Änderung des Parallelogramms zum Anheben des Schleglergehäuses durch einen das Parallelogramm verändernden Arbeitszylinder erfolgt.

Nachstehend wird die Erfindung in Verbindung mit der Zeichnung anhand eines Ausführungsbeispieles erläutert. Es zeigt
- Fig.1: eine stark schematisierte Darstellung einer Ausführungsform der Erfindung, und
- Fig.2: eine weitere Ausführungsform der Erfindung, und
- Fig.3: eine schematische Darstellung einer Variante der Erfindung.

Das Schleglergehäuse 1 nimmt eine Schleglerwelle 2 mit Schleglerwerkzeug 3 auf, das die Rüben 4 von den Blättern 5 im Abstand von wenigen Zentimetern über der Kopffläche 6 der Rübe 4 abschlägt. Die Wirkfläche des Schleglerwerkzeuges 3, d. h. die Schleglerhöhe, ist mit 7 bezeichnet. Bei herkömmlichen Rübenerntemaschinen wird das Schleglergehäuse 1 über ein Stützrad 8 mit höhenverstellbarem Träger 9 und Tragarm 10 aufgenommen. Wird der Träger 9 in der Höhe verstellt, wird dadurch das Schleglergehäuse 1 und mit ihm die Schleglerwelle 2 in der Höhe verstellt. Stützrad 8, Träger 9 und Tragarm 10 entfallen im Falle vorliegender Erfindung.

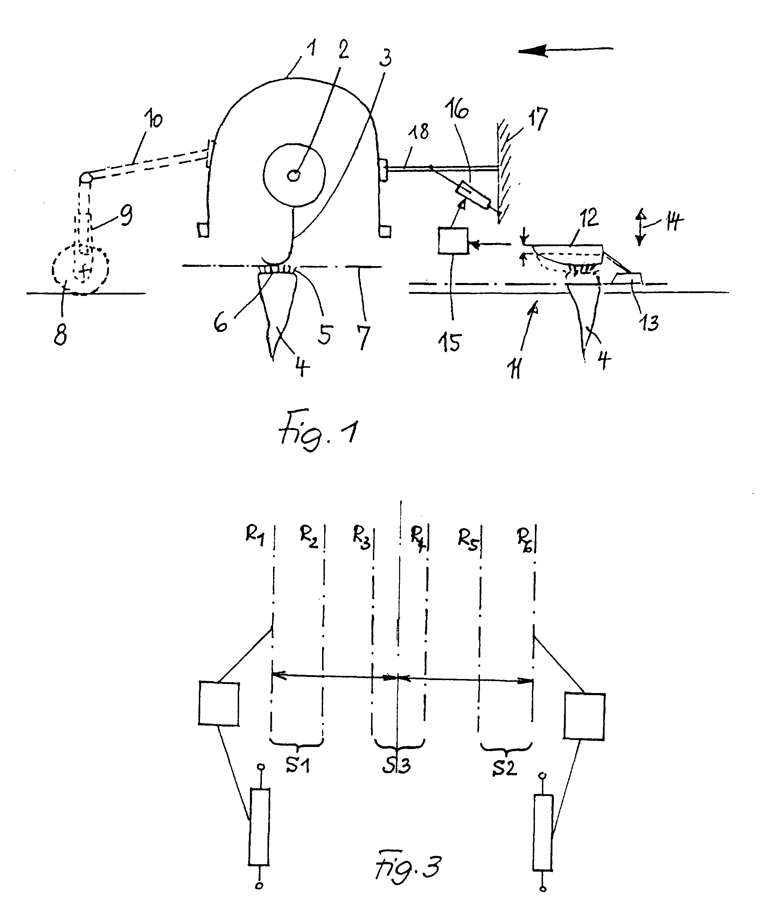

Der Nachköpfer 11 weist ein Tastelement 12 mit zugeordnetem Köpfmesser 13 auf. Das Tastelement 12 mit Messer 13 ist höhenbeweglich, wie mit Pfeil 14 angedeutet, ausgebildet. Das Tastelement 12 gleitet über den Rübenbestand bzw. über die geschlegelten Rüben 4, so daß die Höhenbewegung des Tastelementes von der Höhe der Rübe über dem Erdboden abhängt und entsprechend der Bestandshöhe wechselt. Die Höhenbewegung bzw. die Wegstrecke, um die das Tastelement 12 sich bewegt, wird auf eine elektrische bzw. elektronische Schaltvorrichtung 15 übertragen, die die zurückgelegte Wegstrecke in elektrische Signale umwandelt. Hierzu kann beispielsweise eine Potentiometersteuerung verwendet werden. Die aus der Schaltvorrichtung 15 abgegebenen elektrischen Signale dienen zur Beaufschlagung eines Antriebs- bzw. Verstellzylinders 16, der bei der Darstellung nach Fig. 1 einen Träger 18 betätigt, welcher mit einem Ende am Schleglergehäuse 1 und mit dem anderen Ende am Maschinenrahmen 17 befestigt ist. Bei einer Beaufschlagung des Antriebszylinders 16 wird das Schleglergehäuse 1 angehoben oder abgesenkt wird, je nachdem, ob der Antriebszylinder 16 ausgefahren oder eingezogen wird.

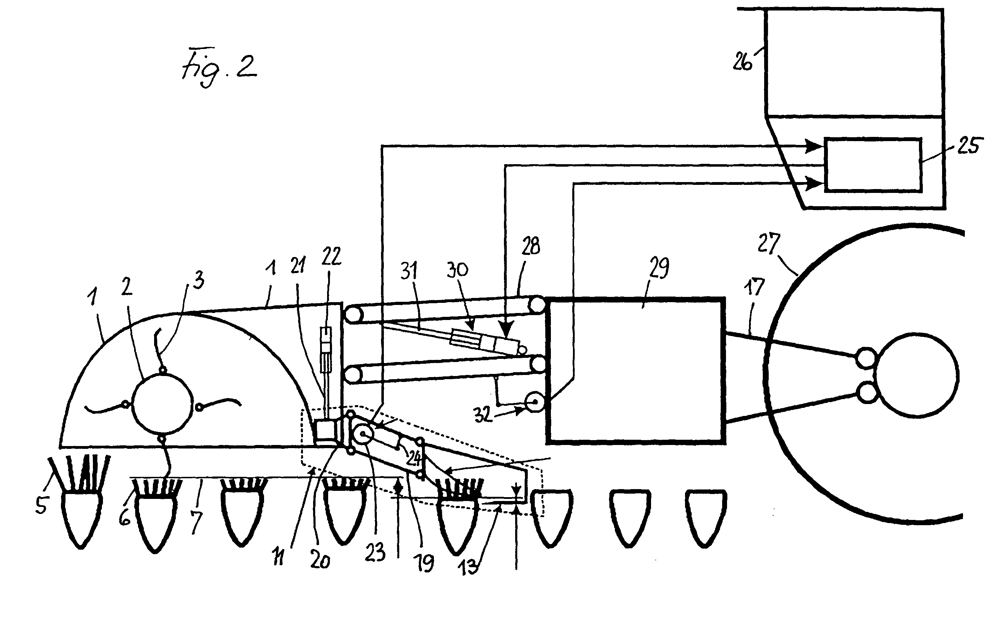

Bei der Ausführungsform nach Fig. 2 ist der Nachköpfer 11, der das Tasterelement 12 und das Köpfmesser 13 aufweist, über eine Parallelogrammführung 19 und einen Täger 20 mit dem Schleglerghäuse 1 verbunden. Der Träger 20 steht dabei in Verbindung mit Höhe verstellt, so daß damit eine Grundeinstellung der Arbeitshöhe des Nachköpfers erzielt wird. Der Nachköpfer 11 weist einen Winkelaufnehmer 23, z. B. in Form eines Potentionmeters auf, der über ein Gestänge 24 mit dem Parallelogramm 19 verbunden ist. Die Signale der Bewegungsänderung des Winkelaufnehmers 23 und damit der Höhenbewegung des Nachköpfers 11 werden über eine Leitung der elektronischen Vorrichtung 25 aufgegeben, die in der Fahrerkabine 26 des Rodefahrzeuges 27 angeordnet ist.

Der gesamte Schlegler 1, 2, 3 mit Nachköpfer 11 ist über eine Parallelogrammanordnung 28 mit dem Roder 29 des Fahrzeuges verbunden; die Parallelogrammanordnung 28 und damit der Schlegler 1, 2, 3 wird über einen Hubzylinder 30 mit Hubstange 31 verstellt. Ein weiterer Winkelaufnehmer 32, der ebenfalls als Potentiometer ausgebildet sein kann, ist am Roderfahrzeug befestigt und überträgt die festgestellte Winkelverdrehung an das Elektonikgerät 25, die in einem einen Teil des Elektronikgerätes bildenden Prozessor die durch die beiden Winkelaufnehmer ermittelten Meßdaten verarbeitet und den Verstellzylinder 30 des Parallelogramms 28 entsprechend beaufschlagt und dadurch den Schlegler 1, 2, 3 mit Gehäuse und Nachköpfer 11 entsprechend in der Höhe verstellt.

Bei der schematischen Darstellung nach Fig. 3 sind sechs Rübenreihen R1 bis R6 angedeutet, die mit einer sechsreihigen Rübenerntmaschine gleichzeitig gerodet werden. Davon werden beispielsweise jeweils zwei Abschnitte S1, S2 zu je zwei Reihen voneinander unabhängig geregelt, so daß die erfindungsgemäße Schleglerregelung auf Bodenunebenheiten oder dergleichen reagieren kann. Der mittlere Abschnitt S3 bleibt dabei ungeregelt.

Bei einer anderen (nicht dargestellten) Ausführungsform der Erfindung ist eine entsprechende, dem Schlegler vorlaufende Tastvorrichtung, z.B. in Form von am Maschinenrahmen angeordneten Tasträdern vorgesehen, die die Kopffläche 6 des Rübenbestandes 4 abtasten, und die mit dem Maschinenrahmen verbunden sind, so daß die Stützradanordnung auch bei dieser Ausführungsform nicht erforderlich ist. Desweiteren kann eine Ausführungsform vorgesehen sein, bei der das Tastelement im Hinblick auf das Schleglergehäuse nachlaufend angeordnet, jedoch nicht mit dem Nachköpfer verbunden ist, d.h. unabhängig von ihm arbeitet.

## Patentansprüche

1. Automatische Höhensteuerung für Schlegler (1, 2, 3) mit Nachköpfer (11) von Maschinen zum Ernten von Wurzelfrüchten, bei der die Arbeitshöhe (7) der Schleglerwelle (2) auf das Niveau des Blattansatzes der Wurzelfrüchte (5, 6), und der Nachköpfer (11) auf das Niveau der abzunehmenden Kopfscheibe eingestellt wird, und die Einstellung unterschiedlichen Rübenbeständen angepaßt fortlaufend verändert wird, wobei eine dem Schlegler (1, 2, 3) zugeordnete Tastvorrichtung (12) die Schleglerwelle (2) bzw. das Schleglergehäuse (1) so beaufschlagt, daß die von der Tastvorrichtung (12) ausgeführte Höhenbewegung proportional auf die Schleglerwelle (2) bzw. das Schleglergehäuse (1) übertragen wird, **dadurch gekennzeichnet, daß** bei dem dem Schlegler (1, 2, 3) zugeordneten Nachköpfer (11) die Tastvorrichtung (12) auf die Kopfseite der Wurzelfrüchte (5, 6) mit Blättern zugestellt und abgetastet wird, daß die von der Tastvorrichtung (12) zurückgelegte Wegstrecke durch eine elektrische oder elektronische Vorrichtung (15) festgestellt wird, die die Höhenbewegung der Tastvorrichtung in elektrische Signale. umwandelt, und daß diese Signale in eine Antriebsbewegung mindestens eines Verstellzylinders (16) umgesetzt werden, die eine entsprechende Höhenbewegung des Schleglergehäuses (1) bzw. der Schleglerwelle (2) ausführt.

2. Automatische Höhensteuerung nach Anspruch 1, **dadurch gekennzeichnet, daß** die dem Schlegler zugeordnete Tastvorrichtung (12) in Form einer Tasterzunge Teil des Nachköpfers (11) mit Köpfmesser (13) ist, das die Köpfdicke der Wurzelfrüchte festlegt, daß die Tasterzunge, die die Oberseite der Wurzelfrucht abtastet und auf eine bestimmte Köpfdicke eingestellt ist, über einen Träger mit dem Schleglergehäuse (1) fest verbunden ist, und daß bei einer Höhenverstellung der Tasterzunge aufgrund der Abtastung der Wurzelfrüchte diese Höhenbewegung in eine proportionale Höhenbewegung des Schleglergehäuses umgesetzt wird.

3. Automatische Höhensteuerung nach Anspruch 2, **dadurch gekennzeichnet, daß** der mit der Tasterzunge verbundene Träger (1) als eine mit dem Schleglergehäuse bzw. der Schleglerwelle befestigte Parallelogrammführung ausgebildet ist, mit der ein Winkelaufnehmer (23) gekoppelt ist, der die Höhenbewegung der Tasterzunge (14) in ein elektrisches Signal umwandelt, das über einen Antriebszylinder die Parallelogrammführung analog der Höhenbewegung der Tasterzunge (14) steuert.

4. Automatische Höhensteuerung nach Anspruch 2 oder 3, **dadurch gekennzeichnet, daß** der Winkelaufnehmer eine Potentiometeranordnung ist.

5. Automatische Höhensteuerung nach einem der Ansprüche 1 - 4, **dadurch gekennzeichnet, daß** ein weiterer Winkelaufnehmer (32) dem Roder (29) zugeordnet ist, daß der Winkelaufnehmer (32) mit einer Parallelogrammführung (28) gekoppelt ist, daß die der Winkelbewegung des Winkelaufnehmers entsprechenden Signale der elektronischen Vorrichtung (25) zugeführt werden, und daß die Signale aus den beiden Winkelaufnehmern (23, 32) in der elektronischen Vorrichtung (25) verarbeitet werden und das Resultat der Verarbeitung dem Verstellzylinder (30) aufgegeben wird.

6. Automatische Höhensteuerung nach einem der Ansprüche 1 - 5, **dadurch gekennzeichnet, daß** das Köpfmesser (13), mit der die Tasterzungen (12) aufnehmenden Parallelogrammführung (19) befestigt ist.

7. Automatische Höhensteuerung nach einem der Ansprüche 1 - 6, **dadurch gekennzeichnet, daß** das Köpfmesser (13) mit den Tasterzungen (12) befestigt ist.

8. Automatische Höhensteuerung nach einem der Ansprüche 1 - 7, **dadurch gekennzeichnet, daß** der Nachköpfer (11) über einen mit dem Schleglergehäuse (1) befestigten Hubzylinder (22) für die Grundeinstellung einstellbar ausgebildet ist.

9. Automatische Höhensteuerung nach einem der Ansprüche 1 - 8, **dadurch gekennzeichnet, daß** die Wurzelfrucht-Erntemaschine eine mehrreihige Erntemaschine ist.

10. Automatische Höhensteuerung nach Anspruch 9, **dadurch gekennzeichnet, daß** die Wurzelfrucht-Erntemaschine eine sechsreihige Rübenerntemaschine ist.

## Claims

1. Automatic height controller for flailers (1, 2, 3) with aftertoppers (11) of machines for harvesting root crops, in which the working height (7) of the flailer shaft (2) is set to the level of the leaf extension of the root crops (5, 6), and the aftertopper (11) is set to the level of the head disc which is to be removed, and the setting is changed continuously in adaptation to different beet crops, a feeler device (12) which is assigned to the flailer (1, 2, 3) acting upon the flailer shaft (2) or the flailer housing (1) in such a manner that the vertical movement executed by the feeler device (12) is proportionally transmitted to the flailer shaft (2) or the flailer housing (1), **characterized in that**, in the case of the aftertopper (11) which is assigned to the flailer (1, 2, 3), the feeler device (12) is advanced up to the head side of the root crops (5, 6) with leaves and is scanned, **in that** the distance covered by the feeler device (12) is established by an electric or electronic device (15) which converts the vertical movement of the feeler device into electric signals, and **in that** these signals are translated into a driving movement of at least one adjusting cylinder (16) which executes a corresponding vertical movement of the flailer housing (1) or of the flailer shaft (2).

2. Automatic height controller according to Claim 1, **characterized in that** the feeler device (12) which is assigned to the flailer and is in the form of a feeler tongue is part of the aftertopper (11) having a topping knife (13) which establishes the topping thickness of the root crops, **in that** the feeler tongue, which scans the upper side of the root crop and is set to a certain topping thickness, is connected fixedly to the flailer housing (1) via a support, and **in that**, when the feeler tongue is adjusted vertically on account of the root crops being scanned, this vertical movement is translated into a proportional vertical movement of the flailer housing.

3. Automatic height controller according to Claim 2, **characterized in that** the support (1) which is connected to the feeler tongue is designed as a parallelogram guide which is fastened to the flailer housing or the flailer shaft and to which an angle sensor (23) is coupled, the sensor converting the vertical movement of the feeler tongue (14) into an electric signal which uses a driving cylinder to control the parallelogram guide in the same manner as the vertical movement of the feeler tongue (14).

4. Automatic height controller according to Claim 2 or 3, **characterized in that** the angle sensor is a potentiometer arrangement.

5. Automatic height controller according to one of Claims 1-4, **characterized in that** a further angle sensor (32) is assigned to the lifter (29), **in that** the angle sensor (32) is coupled to a parallelogram guide (28), **in that** the signals corresponding to the angular movement of the angle sensor are fed to the electronic device (25), and **in that** the signals from the two angle sensors (23, 32) are processed in the electronic device (25) and the result of the processing is fed to the adjusting cylinder (30).

6. Automatic height controller according to one of Claims 1-5, **characterized in that** the topping knife (13) is fastened to the parallelogram guide (19) which holds the feeler tongues (12).

7. Automatic height controller according to one of Claims 1-6, **characterized in that** the topping knife (13) is fastened to the feeler tongues (12).

8. Automatic height controller according to one of Claims 1-7, **characterized in that** the aftertopper (11) is designed in a manner such that it can be set for the basic setting via a lifting cylinder (22) fastened to the flailer housing (1).

9. Automatic height controller according to one of Claims 1-8, **characterized in that** the root-crop harvesting machine is a multi-row harvesting machine.

10. Automatic height controller according to Claim 9, **characterized in that** the root-crop harvesting machine is a six-row beet harvesting machine.

## Revendications

1. Système de régulation automatique de la hauteur de fléaux (1, 2, 3) à décolleteuse postérieure (11) pour des machines de récolte de plantes racines, dans lequel la hauteur de travail (7) de l'arbre à fléaux (2) est réglée en fonction du niveau d'amorce de la feuille des plantes racines (5, 6), la décolleteuse postérieure (11) est réglée au niveau de la couche supérieure à retirer et le réglage est modifié continuellement en fonction des différentes plantations de betteraves, un dispositif tactile (12) raccordé au fléau (1, 2, 3) alimentant l'arbre à fléaux (2) ou la gaine à fléaux (1) de telle sorte que le mouvement vertical exécuté par le dispositif tactile (12) soit transmis de façon proportionnelle à l'arbre à fléaux (2) ou à la gaine à fléaux (1), et **caractérisé en ce que**, au niveau de la décolleteuse automatique (11) raccordée au fléau (1, 2, 3), le dispositif tactile (12) est, sur le côté supérieur des plantes racines (5, 6), recouvert et balayé par des feuilles, **en ce que** la distance parcourue par le dispositif tactile (12) est fixée par un dispositif électrique ou électronique convertissant le mouvement vertical du dispositif tactile en signaux électriques, et **en ce que** ces signaux sont convertis en un mouvement d'entraînement d'au moins un cylindre de réglage (16) générant un mouvement vertical correspondant de la gaine à fléaux (1) ou de l'arbre à fléaux (2).

2. Système de régulation automatique selon la revendication 1, **caractérisé en ce que** le dispositif tactile (12) en forme de langue palpeuse est un élément de la décolleteuse automatique (11) avec couteau à décolleter (13) qui fixe l'épaisseur de décolletage des plantes racines, **en ce que** la langue palpeuse qui balaye le côté supérieur du fruit racine et qui est réglée sur une épaisseur de décolletage précise a été raccordée fixement à la gaine à fléaux (1), par l'intermédiaire d'un support, et **en ce que**, en cas de mouvement vertical de la langue palpeuse sur la base du balayage des plantes racines, ce mouvement vertical est converti en un mouvement vertical proportionnel de la gaine à fléaux.

3. Système de régulation automatique de la hauteur selon la revendication 2, **caractérisé en ce que** le support (1) raccordé à la langue palpeuse se présente sous la forme d'un guidage de parallélogramme fixé avec la gaine à fléaux ou le bras à fléaux et auquel est raccordé un capteur d'angle (23) convertissant le mouvement vertical de la langue palpeuse (14) en un signal électrique réglant le guidage de parallélogramme conformément au mouvement vertical de la langue palpeuse (14), via un cylindre d'entraînement.

4. Système de régulation automatique de la hauteur selon la revendication 2 ou 3, **caractérisé en ce que** le capteur d'angle est un système à potentiomètre.

5. Système de régulation automatique de la hauteur selon une des revendications 1 - 4, **caractérisé en ce que** un autre capteur d'angle (32) a été raccordé à l'arracheuse (29), **en ce que** le capteur d'angle (32) a été raccordé à un guidage de parallélogramme (28), **en ce que** les signaux correspondant au mouvement d'angle du capteur d'angle sont transmis au dispositif électronique (25), et **en ce que** les signaux émanant des deux capteurs d'angle (23, 32) sont traités dans le dispositif électronique, le résultat du traitement étant transmis au cylindre de réglage (30).

6. Système de régulation automatique de la hauteur selon une des revendications 1 - 5, **caractérisé en ce que** le couteau à décolleter (13) a été fixé avec le guidage de parallélogramme (19) recevant les langues palpeuses (12).

7. Système de régulation automatique de la hauteur selon une des revendications 1 - 6, **caractérisé en ce que** le couteau à décolleter (13) a été fixé avec les langues palpeuses (12).

8. Système de régulation automatique de la hauteur selon une des revendications 1 - 7, **caractérisé en ce que** la position de départ de la décolleteuse postérieure (11) peut être réglée via un cylindre de levage (22) fixé avec la gaine à fléaux (1).

9. Système de régulation automatique de la hauteur selon une des revendications 1 - 8, **caractérisé en ce que** la machine de récolte de plantes racines est une machine de récolte à plusieurs rangées.

10. Système de régulation automatique de la hauteur selon la revendication 9, **caractérisé en ce que** la machine de récolte de plantes racines est une machine de récolte de betteraves à six rangées.
